# EUROPEAN PATENT APPLICATION

(11) **EP 4 465 251 A1**
(43) Date of publication of application: **20.11.2024**
(21) Application number: 23461590.4
(22) Date of filing: 15.05.2023
(51) Int. Cl.: G06V 20/00

(54) **AN EDGE DEVICE, SYSTEM AND METHOD FOR WILDFIRE DETECTION BASED ON IMAGE DATA GATHERING**

(71) Applicant: Neuralbit Technologies sp. z o. o., 31-927 Kraków (PL)
(72) Inventor: Zuchniak, Konrad, 31-927 Kraków (PL); Jaglarz, Piotr, 31-934 Kraków (PL); Setner, Tomasz, 30-011 Kraków (PL); Kosk, Eryk, 96-500 Sochaczew (PL)
(74) Representative: Patpol Kancelaria Patentowa Sp. z o.o.

(57) **Abstract**

The subject of the invention is an edge device, system and method for detecting wildfires based on image data gathering. The edge device (200) for detecting fires comprises an edge processing unit (201), comprising a video capturing module (2011) and is characterised in that it further comprises an Al edge model (2013) for smoke image analysis, a video processing module (2012) configured to trim frames from video sequences into fragments and to correlate fragments between adjacent frames in video sequences, wherein said Al edge model (2013) for smoke image analysis is configured to output smoke detection probability based on said correlated fragments of two frame video sequence and contextual data. The system (2) for wildfire detection comprises a cloud-based control software (300) and at least one edge device (200). The method for wildfire detection comprises the following steps run on the edge device (200): video sequence capturing, video sequence pre-processing, machine learning inference by the AI model for smoke image analysis, checking if the smoke is detected based on the output of said Al edge model (2013) for smoke image analysis, if the smoke is detected, outputting smoke detection alert message.

## Description

### FIELD OF THE INVENTION

The present invention relates to an edge device, system and method for wildfire detection based on image data gathering.

### BACKGROUND OF THE INVENTION

Recent advances in the field of wildfire detection have significantly changed the landscape of available means to monitor, sense and manage wildfires, in particular in forestry.

Most of the prior art approaches are based on processing of image data gathered from the forest terrain. Images of the surroundings are lastly analysed using machine vision however real time analysis requirement is still a challenge if better accuracy is another goal. It is well known that the analysis accuracy is better if raw data are processed, on the other hand the latency might become unacceptable if a centralised unit is the only unit responsible for processing such raw data. Last development in the edge technology allowed to move and distribute the main computation to remote units close to the cameras. It allowed to mitigate the problem of sending a large set of data and long computing time. However, usage of neural networks for image analysis in edge devices is still challenging due to some hardware constraints.

This problem has been partially resolved by a known device, system and method for wildfire detecting based on image data gathering and machine learning detection models which is disclosed in the patent application US 2022/0375199. In particular it relates to an edge fire detection device with a deep learning model configured to detect flames on the images. However, said known method is useful for closed rooms or open spaces with good visibility, because flames are not the earliest detectable phenomena during fires in forests. In some cases the wildfire can be detected too late based on flames to stop it efficiently. On the other hand, smoke is an earlier sign of a possible fire but it is hardly detectable on images due to its nature and typically it is detected using other types of sensors .

### SUMMARY OF THE INVENTION

It is therefore desirable to provide a device, system and a method for wildfire detection based on image gathering, which addresses drawbacks of the prior art and provides better accuracy and enhanced efficiency, in particular more earlier and accurate information on fire localization.

The present invention provides a computer implemented method for training an AI edge model for smoke image analysis, characterised in that the method comprises the step of providing on one or more hardware processors a convolutional neural network comprising
two separate set of convolutional layers, each set of convolutional layers having an input for one of two correlated fragments, each fragment being a part of one frame from two frames video sequence,
one set of deep layers having as an input concatenated outputs of said two sets of convolutional layers a set of at least one dense layer having as an input data concatenated from an input for contextual data and an output of said set of deep layers
an output from said set of at least one dense layer for outputting smoke detection probability for the two input fragments,
the step of providing a training data set, the data set comprising:
   set of two frames video sequences, each frame being cut into fragments, each fragment of each training frame being labelled separately.
   set of contextual data for each frame, the contextual data being at least one among: angle that is formed between the observation line of the camera and the north direction, angle of inclination that is formed between the observation line of the camera and the line crossing the horizon, value of the optical zoom applied by the camera, and for a given date and time, the apparent position of the sun in the sky and the relative orientation of the sun relative to the direction of camera observation, air temperature, humidity, insolation, atmospheric pressure, cloudiness, wind direction and speed;
   the step of training said convolutional neural network via the one or more hardware processors with the use of said training data, to indicate presence of the smoke in the input two frames video sequence through a classifier output providing classification for each two correlated fragments into which the two frames of the video sequence was cut, and wherein the step of training comprises: performing learning of said convolutional neural network utilising a transfer learning and fine tuning approach, wherein the classifier learns a classification task based on a loss function (L) that minimises a classifier loss function.

Advantageously, the two input fragments are correlated in space by the optical flow algorithm.

Advantageously, the meteorological data are provided as time series with a time resolution of one hour.

According to another aspect, the present invention provides an edge device for wildfire detection, comprising an edge processing unit, comprising a video capturing module characterised in that it further comprises an AI edge model for smoke image analysis, a video processing module configured to trim frames from video sequences into fragments and to correlate fragments between adjacent frames in video sequences, wherein said AI edge model for smoke image analysis is configured to output smoke detection probability based on said correlated fragments of two frame video sequence and contextual data and is trained by the method according to the invention.

Advantageously, the edge processing unit further comprises a device control module configured to decide based on the output of the AI edge model whether the smoke was detected on the input video sequence and to output a smoke detection alert.

Advantageously, the edge device comprises an integrated camera.

According to another aspect, the present invention provides a system for wildfire detection comprising a cloud-based control software and at least one edge device according to the invention.

Advantageously, thecloud based software comprises a fire location prediction module configured to predict the fire location based on the position and zoom parameters of at least two cameras from which at least two edge devices acquired video sequences on which the smoke was detected.

Advantageously, the cloud based software comprises an AI edge models fine tuning module configured to periodically train AI edge models based on training data gathered in the cloud based software during the work of the system.

Advantageously, the cloud-based control software comprises a camera control module configured to gather zoom and position parameters from cameras and based on said data and the smoke detection alert from the frist edge device, to request change of their position and zoom parameters so as they face the smoke detected by the camera connected to the first edge device .

Yet in another aspect, the present invention provides a method for wildfire detection comprising the following steps run on the edge device : video sequence capturing, video sequence pre-processing machine learning inference by the AI model for smoke image analysis trained by the method according to the invention, checking if the smoke is detected based on the output of said AI model for smoke image analysis, if the smoke is detected, outputting smoke detection alert message

Advantageously, the method further comprises the following steps run on the cloud based control software : acquiring compressed video stream, checking for the smoke detection alert message, if the smoke detection alert message is received from the first edge device then sending notification, checking confirmation of the alert message, if the smoke detection alert is confirmed, predicting fire localization.

Advantageously, checking if the smoke is detected involves comparing smoke detection probabilities relating to fragments of the two frames within which the smoke was detected with a threshold value.

Advantageously, confirming alert message involves sending control signals to all cameras to change their position and zoom parameters so as they face the smoke detected by a camera connected to the first edge device .

In another aspect, it is provided a computer-readable storage medium having instructions encoded thereon which when executed by a processor, cause the processor to perform the methods according to the invention.

The system according to the invention is designed for the preventive detection of wildfires (with a focus on forest environments) and uses a network of edge devices that can be embedded in the already existing fire detection systems in which remote cameras are used as main fire sensors. Cameras cooperating with edge devices constantly monitor the environment to detect even trace amounts of smoke. This allows for the detection of fires at a very early stage, which is crucial for successful firefighting operations.

Moreover, advanced machine learning algorithms analyse the data received from the video cameras network in real time to eliminate false alarms and determine the exact location of the fire. In case of danger, the local fire brigade is alerted automatically. The system sends information about the location of the fire. In addition, the system according to the invention updates fire development data in real time, which allows for more efficient management of the firefighting operation.

Specific pre-processing of the training data set allows receiving higher accuracy of image classification by the smoke detection model implemented in the edge devices.

By providing special preprocessing of video sequences before inputting them into the machine learning model, namely by choosing for analysis only two frames video sequences, cutting them into smaller fragments and by correlating their fragments in space for parallel analysis, hardware constraints on edge devices are overcome because of the minimal input data volume.

By providing additional contextual data to the machine learning model, like the relative position of the sun and the camera, much valuable information is taken into account during image analysis, thus higher accuracy of image classification by the smoke detection model implemented in the edge devices is received.

By providing local pre-processing of data collected from cameras before sending it to the central unit, real-time monitoring of fires becomes possible. It should be noted that observation towers are often installed in hard-to-reach places with poor mobile network coverage. It is possible to install a private communication infrastructure, but it is prohibitively expensive. Thus, placing edge detection devices right next to the observation cameras allows access to the unprocessed and uncompressed video signal without sending it from a remote location, which in the case of analysis in the cloud or a location other than the camera requires lossy compression for data transmission.

Moreover, by adapting the quality of the compressed video stream to the capacity of the network it is also possible to send as much as possible information to the alarm and dispatch points, where the observer directing the possible firefighting operation is located, while simultaneously analysing the uncompressed image of the highest possible quality.

By local fine-tuning of the detection model the method of fire detecting is more accurate.

In particular, the detection method is enhanced by the use of an offline machine learning accelerator, thanks to which an uncompressed image of much higher quality is analysed compared to the situation of image analysis by transmitting and compressing the video signal. This leads to better granularity to the accuracy of the embedded detection algorithm. As a consequence, the method gains more robustness but also more stability.

Moreover, by involving particular auto checking routine of the initial smoke detection alert in the process of detecting wildfires the method can better eliminate false positives and enables a more accurate estimation of the location of the fire which enhances the usefulness of the solution during the firefighting operation by providing valuable data and predictions in real time.

The method/system according to the invention has better efficiency also because of the specific approach to smoke detection, namely by using specific cutting of the frames into smaller fragments in order to binary classify them instead of looking for a whole object.

Finally, the results of the method according to the invention are outputted in a complex manner, namely by providing appropriate emergency services with such information like the location of the fire, its predicted size, and additional forecasts regarding the direction and speed of the fire's spread. This results in a comprehensive understanding of the real situation and enables the user of the system to act in the most optimal way possible in order to counter the emergency situation.

### BRIEF DESCRIPTION OF THE DRAWINGS

The following detailed description, given by way of example, but not intended to limit the invention solely to the specific embodiments described, may best be understood in conjunction with the accompanying drawings, wherein:
Fig. 1 shows a general diagram of the system according to the invention;
Fig. 2 shows schematically details of the edge device according to the invention ;
Fig. 3 shows schematically details of the edge processing unit embedded in the edge device according to the invention;
Fig.4 shows schematically details of the cloud-based control software run in the control server;
Fig.5 shows a schematic diagram of a GUI run on the user station;
Fig.6 shows a flowchart of the method run in the edge device according to the invention;
Fig.7 shows schematically the concept of synchronised work of cameras;

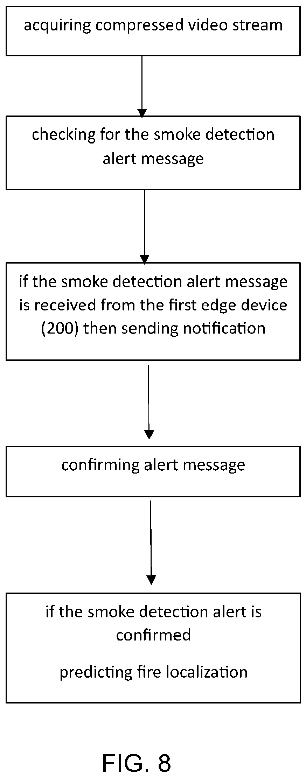

Fig.8 shows a flowchart of the method run in the central unit according to the invention;
Fig.9 shows a diagram of the system for training the Al edge module;
Fig. 10 shows schematically the concept of local fine-tuning of the AI detection module;
Fig.11 shows schematically the concept of fine-tuning of the AI detection module based on user feedback;
Fig.12 shows schematically exemplary images preprocessed before inputting to the AI model ;

### DETAILED DESCRIPTION

The system and the method for fire detection can be useful for early wildfire identification in the forest based on image data gathering.

Moreover, the system and the method according to the invention can be of practical meaning also for wildfires in other non-urbanized areas, such as agricultural wastelands, grasses or bushes. The system according to the invention allows to extend the functionality of an existing video forest monitoring/surveillance system with automatic smoke detection, and in combination with the appropriate camera it can constitute a complete system.

While various embodiments of the invention are shown and described herein, such embodiments are provided by way of example only. Numerous variations, changes, and substitutions may occur to those skilled in the art without departing from the invention. It should be understood that various alternatives to the embodiments of the invention described herein may be employed.

Unless defined otherwise, all terms of art, notations and other technical and scientific terms or terminology used herein are intended to have the same meaning as is commonly understood by persons skilled in the art to which the claimed subject matter pertains. In some cases, terms with commonly understood meanings are defined herein for clarity and/or for ready reference, and the inclusion of such definitions herein should not necessarily be construed to represent a substantial difference over what is generally understood in the art.

The term "coupled" means a direct or indirect connection, such as a direct electrical, mechanical, or magnetic connection between the components that are connected or an indirect connection, through one or more passive or active intermediary devices.

The term "module" or "logic" or "unit" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on." The terms "substantially," "close," "approximately," "near," and "about," generally refer to being within +/-10 percent of a target value.

Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

The term "real-time" here generally refers to systems that respond under real-time or live constraints and generate a result within a time frame (e.g., in a few or less microseconds).

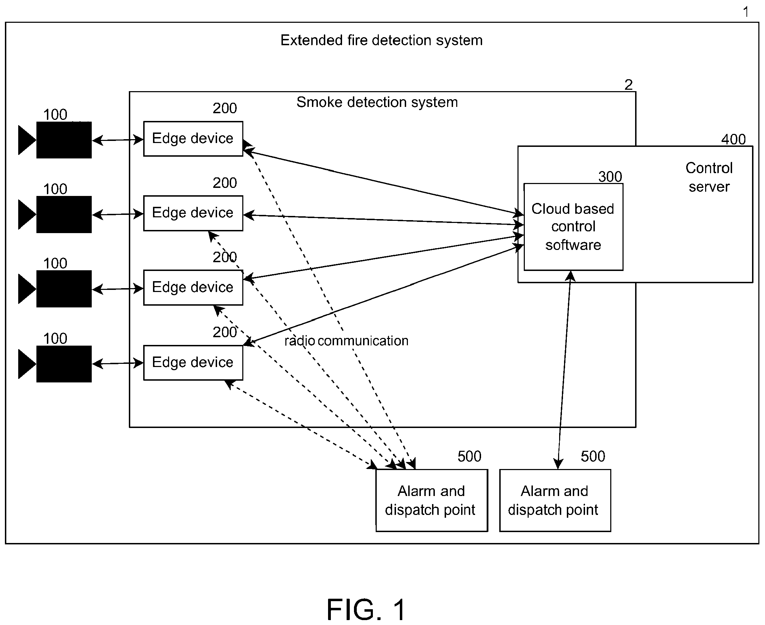

The system 2 for wildfire detection according to the invention will be now described in reference to Fig.1. The system 2 for wildfire detection according to the invention is used as an extension of existing video forest monitoring/surveillance systems 1, however it can be installed also as a part of a completely new system. The complete extended system 1 can be divided into four main components: a) a set of single existing or newly installed cameras 100, external to or integrated within the edge devices 200 b) a set of edge detection devices 200 c) cloud based fire prediction and control software 300 embedded in the central unit 400 being a web control server d) plurality of user stations 500, including alarm and dispatch points. The cameras 100 and the control server (central unit 400) are in general not a commercial part of the system according to the invention.

The system 2 according to the invention focuses on fire detection in outdoor areas, more specifically forest wildfire detection. In a situation typical for this environment, the observation camera (or the former human observer equipped, for example, with a binoculars) is located on the observation tower above the treetops. The ignition point of the fire, which is most often located in the lower layers of the stand, most often in the litter at ground level, is not directly visible from the observation point. Only smoke is visible, which comes out above the crowns of trees. Therefore, in the case of machine vision-supported fire observation of forest areas, focusing on smoke detection (instead of fire) seems to be the only sensible solution. Fire detection makes sense when observing closed areas, e.g. warehouses or factories, because there the fire source and the fire itself can be directly observed by the surveillance camera. In the case of trying to monitor wildfires, this approach does not work, because in the field of view of the camera (or the observer) only smoke is visible,which has already pierced above the level of the treetops, in particular at the beginning of the fire.

In one embodiment of the system 1, the set of single observation cameras 100 is placed locally in the forest or other area of interest. The first part of the system 2 for smoke detection according to the invention consists of a set of edge devices 200 (edge processing units, EPU) placed right next to the observation cameras. Said specially designed hardware (EPUs) are installed on the observation towers as plug and play devices. The edge devices 200 are in communication with the cameras 100 via cable. Each camera 100 is connected to its complementary edge device 200. Cable connection allows high capacity data transmission without interruption.

The second part of the system 2 according to the invention is a cloud-based software 300 that controls the operation of many EPUs 200 located on different observation towers. This part of the system 2 according to the invention is also responsible for displaying relevant information to the end user, synchronising work between the EPUs 100, controlling the EPUs 100 by the user, and managing the system of displaying alarms and sending notifications about smoke detection.

The last part of the system are user stations 500 located stationary or being mobiles with the use of which fire alarms or monitoring information are delivered to the end users like fireman, forest inspectors, forest manager or other employee dealing with forest management and fire protection. In particular, user stations 500 are localized in alarm and dispatch points.

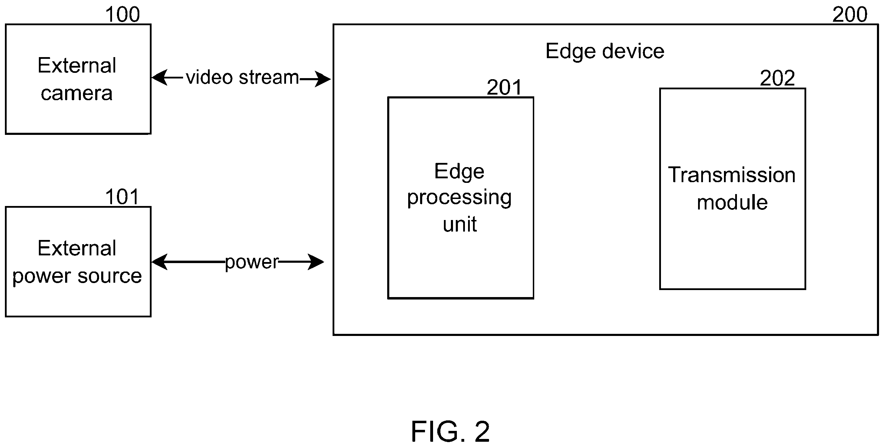

A single edge device 200 (EPU) according to the invention is shown in Fig.2. Regarding its mechanical construction, it can be a waterproof box/case (not shown) with an appropriate sealing system, the outer box being made of plastic or metal. in which all electrical components are housed. Typically such a detection device is provided with attaching means configured to be complementary to attaching means appropriate for particular terrain type and allowing secure attachment in the predetermined location. For example, in the case of forests, it can be a strap made of plastic with an appropriate harness for mounting the sensor on a selected tree. The edge device200 according to the invention is a small device designed for long-term operation in outdoor environments.

As it can be seen in Fig.2 the edge device 200 has several components coupled to each other. Its main part is an edge processing unit 201.For example it can be a commercially available NVIDIA ORIN NX or GOOGLE CORAL EDGE TPU. The other important part of the edge device 200 is a transmission module 202. It can be any commercially available transmission module having an ethernet input and as a consequence providing connection via a router configured for example to use 3G or 4G technology, as well as additionally fixed point to point data link or cable connection. In another embodiment, not shown, the edge device 200 comprises an integrated camera 100.

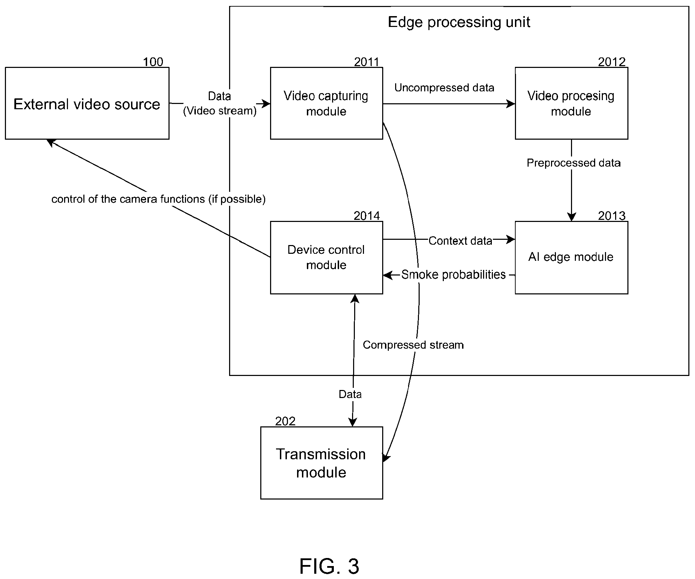

Now in reference to Fig.3, the edge processing unit 201 will be described. It comprises a video capturing module 2011, a device control module 2012, a video processing unit 2013, and an AI edge module 2014. As already mentioned, the edge device 200 is connected to an external camera 100. Moreover as a plug and play device it is also connected to an external power source 101. In one embodiment the external power source 101 can be a grid. In another embodiment said external power source 101 can be a small photovoltaic panel 101 (for example 4.5 cm x 4.5cm), which allows to maintain continuous power supply. In other embodiments the external power source 101 can be any other type of green energy converter appropriate for such use.

The external camera 100 can be a varifocal camera, in particular with high optical zoom adapted for observation.The camera assembly 100 should enable changing its position in the horizontal and vertical axes, as well as should allow for controlling the orientation and recording its exact value. In another embodiment the camera 100 can be a static camera with a fixed spatial orientation. Data which are sent from the camera 100 to the edge device 200 are data on the exact position and orientation of its photodetector in 3D space. On the other hand, if the camera 100 allows external controlling then signals which are sent to the camera 100 are signals to change the orientation of the photodetector as well as to change camera zoom parameters. Particularly, it is possible to synchronise the operation of cameras, which means that each camera 100 receives control signal from its complementary edge device 200, the received control signal being correlated with other control signals received by other cameras 100 from the cloud based control software 300 via their complementary edge devices 200 in order to focus on observation of the same area in the event of fire detection.

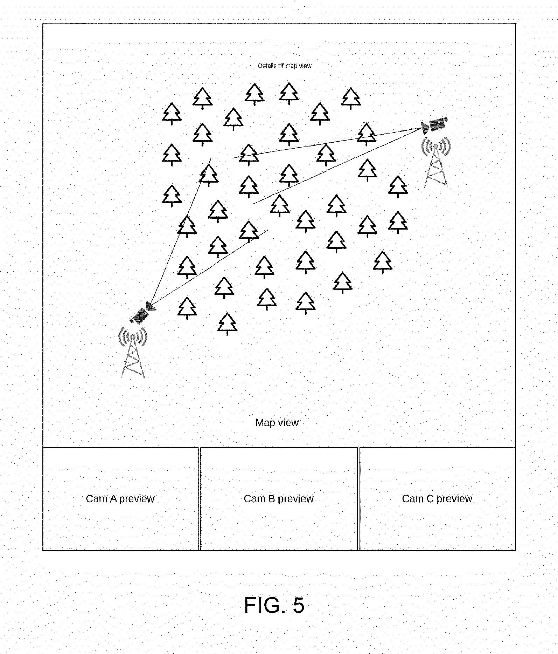

Sending data about the current orientation of the optical sensor and zoom from cameras 100 to the cloud based software 300, via edge devices 200 or directly, allows knowing the viewing directions of each camera 100, and as a consequence the point of intersection of said viewing directions can be estimated by the cloud based control software 300 and sent further to user stations 500 for marking on the map (see also Fig.5).

If the edge devices 200 (EPU devices) are used as an addition to the existing infrastructure, some of the functionality of the system 2 according to the invention may be limited. If the already installed cameras 100 offer a communication protocol that allows EPUs 200 to control the position and zoom of the cameras 100, the above-described functionalities also work. However, if the cameras 100 do not provide such a possibility, then the control functions in the cloud-based control software 300 and in the edge devices 200 are turned off and the EPUs 200 work only as an automatic analyzer of the received video and the user receives only notifications about smoke detection. Some functionalities such as joint management of several cameras will not be available. Yet, in another embodiment, if the system 2 according to the invention comprises also cameras 100 integrated within the edge devices 200 (embodiment not shown), then a varifocal camera 100 with a large maximum zoom that allows to change the direction of observation is used.

The cameras 100 constantly monitor the environment and are able to register smoke visually. In major cases, when the observed environment is the forest,the smoke is registered when it appears above the treetops. There is a certain latency in observing such the first symptom of the fire, however in the forest it is still the first sign which can be observed visually. In the case of the forest, when there is no wind it can have a form of a vertical column. During the windy weather the smoke can be seen everywhere as nearly smog. Thus, the smoke can be registered only on a small selected area of the frame or even on the whole frame. In other types of terrain the smoke can be detected earlier, however each type of terrain influences the way the smoke expands and evolves. As a consequence analysing images of the smoke is not a trivial task and particularly uncompressed data analysis is of importance for smoke detection. That is why the video sequence of the visually registered smoke is transmitted from camera 100 to the video capturing module 2011 of the edge device 200 as raw data (see Fig.3). The video capturing module 2011 is responsible for registering video sequences into a buffer of a memory (not shown) for further use and forwarding.

As shown in Fig. 3, the processing unit 201 of the edge device 200 further comprises a video processing module 2012 that is responsible for first stage processing of raw image data. As mentioned earlier the captured video stream is divided into two separate streams for different purposes. The first stream is forwarded to the AI smoke detection model built in the AI edge module 2013 and the second stream is forwarded via the cloud-based control software 300 to the user station 500 for watching purposes.

Exemplary software routines that are implemented for video pre-processing of the first video stream are : trimming a frame into smaller fragments, using the optical flow algorithm (e.g. Lucas-Kanade method) to find offsets between two frames, so as to cut fragments that overlap with each other, in other words, to find two fragments correlated in space.

Exemplary software routines that are implemented for video pre-processing of the second video stream are compressing to a standard video stream format, e.g. h256 or AV1.

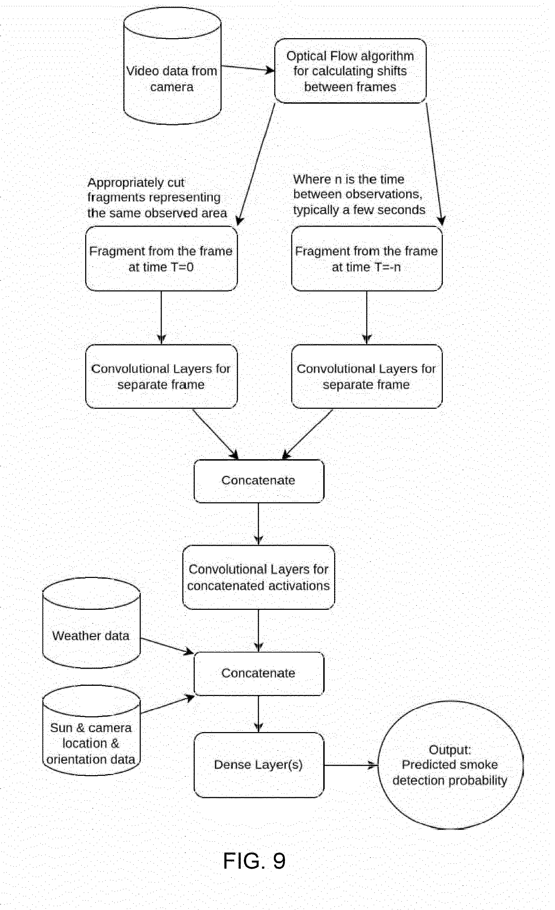

The processing unit 201 of the edge device 200 comprises further an AI edge module 2013 which is the module responsible for machine learning model inference, video sequence analysis and smoke detection. It is a module previously trained as it will be described in reference to Fig. 9. However, advantageously it can be also trained once installed in the edge device 200. This is so called local fine-tuning. The output data of the Al module are a set of probabilities values relating to a set of fragments into which the lastly analysed video frames were cut.

As shown in Fig. 3, the edge processing unit 201 of the edge device 200 also comprises a device control module 2012 that is responsible for several tasks and thus comprises several software modules (not shown). Among other data which are received by the device control module 2014 are the output data of the AI edge module 2013, namely smoke detection probability values expressed as percentages along with their assigned locations in the photo. Based on this information as well as on the data received from the cloud-based control software 300 the device control module 2014 takes a decision whether its complementary camera 100 detected smoke. The algorithm used for this purpose is based on current fire risk level (it should be noted that a lower fire risk raises the detection threshold). In particular the information about the threshold value with which the output probabilities from the AI edge module 2013 should be compared is provided by the end user via its application 600.

Another operations performed by the device control module 2014 are as follows:
- sending control signals to the camera 100 in order to change the orientation and zoom of the camera 100
- receiving, via additional radio communication channel, control signal from the user station 500 relating to camera parameters,
- receiving control signals from the cloud-based managing software 300 relating to probabilities threshold value, relating to camera parameters, relating to angular areas in which to disable detection, relating to camera orientation and zoom control parameters.
- sending control signals to the cloud-based managing software 300 relating to unconfirmed initial smoke detection alert
- receive and install updated machine learning model weights from cloud software

The edge processing unit 201 of the edge device 200 is connected to a transmission module 202. In one embodiment the transmission module 102 allows communication with the use of a mobile communication network e.g. 3G or 4G. In another embodiment, if a fibre cable is available, the transmission module 202 of the edge device 200 can be coupled to the cable internet. In yet another embodiment, the transmission module 202 can be connected via ethernet output to a satellite internet e.g starlink net. Data which are sent to the control server 400 via said transmission module 202 are at least as follows: video stream, information about current camera orientation and current zoom value, locations of places in the image where smoke was detected along with the detection probability percentage.

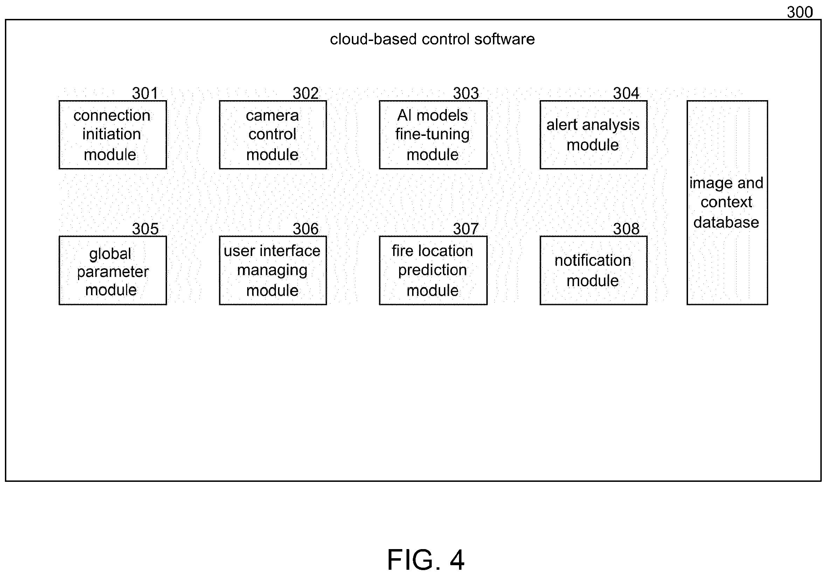

The structure of the cloud based managing software 300 embedded in the control server 400 will be described in reference to Fig. 4. The cloud based managing software 300 comprises several modules like: connection initiation module 301, GUI managing module 306, camera control module 302, edge device managing module 305, fire location prediction module 307, alert analysis module 304, notification module 308, image and context database 309.

The connection initiation module 301 is responsible for establishing communication between the edge devices 200 and the user stations 500. In particular it determines the optimal level of compression, based on network bandwidth, and is additionally responsible for receiving information from the user specifying device control.

The camera control module 302 of the cloud-based control software 300 is responsible for gathering information about the zoom and viewing angles of all cameras 100, and for outputting control signals sent to the edge devices 200 requesting change of the viewing angle and the zoom in the case one of the cameras 100 detected smoke. When one camera 100 detects smoke, the other camera 100 based on the signal received from the camera control module 302 via the edge device 200 guides its detector at viewing angles where smoke can be located. In this way so called synchronisation of the cameras 100 is guaranteed. Once at least camera 100 detected smoke, information about current parameters received from said camera 100 as well from other cameras 100 are sent to the fire location prediction module 307 of the cloud-based control software 300.

The GUI managing module 303 is responsible for displaying information and accepting commands from the user. For example this module is involved in displaying compressed video streams from cameras 100.

The AI model fine-tuning module 303 is responsible for updating machine learning models of the edge devices 200. It manages the set of images memorised in the image and context database 309 which are useful for fine-tuning and manages the time of the additional AI models training. It is responsible for collecting examples of positive and negative alarms verified by the user and expanding and managing data sets.

The alert analysis module (304) is responsible for analysing consequences of smoke detection alerts. It receives data from edge devices 200 about detected smoke as well as feedback data from the user stations 500. Based on data received from the edge devices 200 relating to smoke detection alert it sends control signals to camera control module 302 to start the auto alarm confirmation procedure and to notification module 308 to start the notification procedure, while based on feedback data from the user stations 500 it assigns appropriate labels to images verified by the end user.

The fire location prediction module module is responsible for determining the location of the fire by intersecting the directions of observation from several cameras. It calculates coordinates of the detected fire based on the camera's parameters received from the camera control module 302.

The global parameter control module 305 is responsible for gathering data about fire risk, meteorological data from external providers, smoke probability threshold value and based on this to send control signals to the edge devices 200 in order to allow performing the tasks already described, in particular taking decision whether the smoke was detected on captured video sequences.

As shown in Fig.1 single edge devices 200 are disposed of in different locations in which cameras are located nearby so as to cover the area of interest to be monitored. The edge devices 200 are not directly connected to each other (it is not a mesh grid connection) however they can influence each other's operation as it will be further described. The edge devices 200 communicate directly with the central unit 400 which can be a cloud computing server 400. The central unit 400 communicates with at least one user station 500, including alarm and disposal points 500 via said cloud-based control software 300. Advantageously, the user station 500 can be a laptop or a mobile phone provided with an appropriate application or alternatively the access to the system according to the invention can be supplied via a browser run on said user station 500. Communication between the user station 500 and the edge devices 200 via the software 300 embedded on the cloud computing server 400 is bidirectional and allows controlling edge devices 200 as well as cameras 100.

Fig. 5 shows a schematic view of the user interface 600 (a part of the user application 600) on the user station 500 through which the map shows: the location of the cameras 100, their current viewing direction and viewing angle (depending on the zoom level). In addition, thumbnail previews of the image recorded by the cameras 100 are displayed. The image of each camera 100 separately can be displayed in additional windows/screens. The user has full control over the cameras 100, can control their position, horizontal and vertical direction of observation and zoom (depending on the technical capabilities of the camera movement). Sending direct control signals from the user stations 500 in order to change the camera parameters can be performed via additional radio communication channels as shown in Fig.1. Such additional communication channels are not available in all cases. In particular it can be a system of devices (fixed point-to-point radio links) used to transmit and receive analog or digital radio transmissions. Said system works in the microwave band, with an antenna with a highly directional radiation pattern. Possible throughput of said additional channel is from a few Mb/s to Gb/s.

Now the method for smoke detection, e.g. wildfire detecting according to the invention will be described. The method for wildfire detection according to the invention can be divided into two main components: a) the operation of an individual edge device 200, b) aggregation and processing data from edge devices 200 by a cloud-based software 300 embedded in the control server 400. Both components of the method are run on different hardware entities.

Regarding the first component run on the edge device 200, in one embodiment, the method according to the invention comprises the following steps: a) setting initial parameters in the camera 100 ;
b) acquiring data from the camera 100 then iteratively
c) pre-processing collected data
d) performing machine learning model inference to detect smoke
d) if the smoke is detected then outputting an alert message (e.g.information about smoke location on a specific frame along with corresponding smoke probabilities and the frame sequence itself).

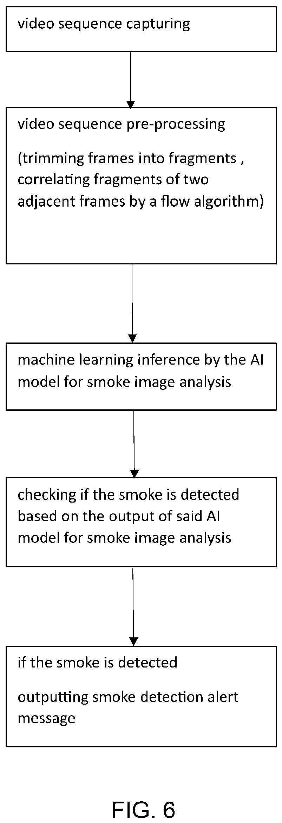

As shown in Fig.6, in the step of setting initial parameters of the camera 100, typically, an initial viewing angle, zoom, and default settings for focus mode and defog mode is set in the camera 100. When the initial parameters are set in the camera 100 (if external control of the camera is possible of course) the edge device 200 acquires images in the step of acquiring data from the camera 100. In this step also feedback data on camera parameters are gathered.

In general, the edge device 200 operates relatively independently of the camera 100 used. Typically, the image is accessed by reading the SDI or HDMI signal. Then the video stream is split into two formats (if the whole system 2 according to the invention is working as a backup monitoring system as mentioned earlier). The first stream is intended for machine learning model inference and is sent directly to the AI edge module 2013 and is at the highest possible quality. Frame rate is relatively low, it depends on the size of the image and the speed of processing the frame by the smoke detection algorithm performed by the AI edge module 2013. Usually it is in the order of several frames per second. A second stream is also created for compression by the video preprocessing module 2012. In the step of acquiring data from the camera, buffering of video sequences takes place for further selective use or forwarding, especially to the cloud-based software control module 300.

In the step of pre-processing collected data, the first stream is pre-processed in the video preprocessing module 2012 to be useful for machine learning model inference. Details of such preprocessing are the same as details of the preprocessing described later in relation to the training method of the AI edge module 2013 (see Fig.9) Also in this step the second video stream is properly compressed (so as not to exceed the bandwidth of the telecommunications network) in the video preprocessing module 2012 based on the channel capacity data received by the device control module 2014. Next, the compressed video stream is sent as a preview to the end user station 500 via the cloud-based control software 300. The most common frame rate is 30 frames per second.

Regarding details, in the step of pre-processing collected data uncompressed images received from the camera 100 are processed for analysis in such a way that it outputs a set of pairs of correlated fragments trimmed from two separate frames constituting a video sequence. In other words, said processing involves trimming each frame from two frames video sequence into smaller fragments, using the optical flow algorithm (e.g. Lucas-Kanade method) to find offsets between two frames, so as to cut fragments that overlap with each other, in other words, to find two fragments correlated in space.

In parallel, in the step of pre-processing, the edge device 200 sends the live camera stream to the control server 400 via the transmission module 103 and then to the user station 500. As mentioned earlier the video stream which is sent is a compressed stream, however the device control module 2014 comprises an additional functionality of checking available current capacity of the transmission channel in order to optimise on-line the task of the video-preprocessing unit 2012.

In the next step of performing machine learning model inference to detect smoke, the AI edge module 2013 takes as an input (see also Fig. 9) a set of two frames in time cut into a set of fragments as well as additional contextual data like the current position of the camera (the angle that is formed between the observation line and the north direction), the angle of inclination (the upward or downward angle that is formed between the observation line and the line crossing the horizon, this value being mainly close to zero, which is caused by observing mainly towards the horizon, so with an inclination close to zero), the current value of the optical zoom applied by the camera, and for a given date and time, the calculated angular apparent position of the sun in the sky. Other contextual input data are meteorological data, such as: temperature, humidity, insolation, atmospheric pressure, cloudiness, wind direction and speed. The context data are received by the device control module 2014. Weather data is acquired via cloud control software 300 from external providers. They contain the representation of parameter values describing the weather conditions at the location of the camera installation over the last 24 hours in the form of a time series with a resolution of one hour. The edge device 200 already has data about the actual orientation of the camera 100, the apparent orientation of the sun is determined on the basis of the geographical location of the edge device and the date and time, having the above two, the relative position of the sun relative to the camera 100 observation point is calculated by the device control module 2014.. Then the AI edge module 2013, based on said input data, outputs a set of smoke detection probability values expressed as percentages along with their assigned locations in the photo. A final verdict on whether the smoke was detected or not is taken by the device control module 2012 based on the current output of the AI edge module 2013 . The verdict is established by comparing the output smoke probabilities with the threshold value pre-set by the end user (system administrator) or gathered automatically in the cloud-based control software 300 from an external provider based on the current fire risk provided as a numerical value, for example from national institutions responsible for monitoring forest areas. In general the level of fire risk is calculated as a function of meteorological values, in particular air temperature and humidity as well as forest litter humidity. Exemplary algorithms of calculating such fire risk are typically established by law, for example in Poland it is defined by specific regulation of the Ministry of climate and environment (see https://isap.sejm.gov.pl/isap.nsf/download.xsp/WDU20220001065/O/D20221065.pdf). If the output probability for a certain fragment exceeds said threshold value then the final verdict that the smoke has been detected is taken and appropriate control signals are sent to other parts of the system 2, including signal requesting showing the suspicious fragment on the end user device 500.

Then in the last step of outputting an alert message, if the smoke is detected, the alert message containing the set of data as follows: a set of smoke detection probability values expressed as percentages along with their assigned locations in the frames as well as the frames themselves and camera parameters of the camera 100 which detected the smoke, is sent from the device control module 2014 to the cloud-based software 300.

Regarding the second component run on the control server 400 as cloud based software 300, the method according to the invention comprises the following steps:
a) initiating the connection between the edge device (200) and the end user station (500) and then iteratively
b) acquiring compressed video stream
c) checking for the smoke detection alert message
   if the smoke detection alert message is received then
d) sending notification
e) checking for confirmation of the alert message
   if the smoke detection alert is confirmed then
e) predicting fire localizacion

In the step of initiating the connection between, the connection initiation module 301 establishes connection between the edge devices (200) and the end user station 500, including alarm and dispatch point 500.

Next in the step of acquiring a compressed video stream, the GUI managing module manages displaying of the stream on the end user station as well as displays prompts relating to action required to be performed by the user. It also allows inputting via the I/O devices certain data as well as control signals to be sent to the cameras 100.

The method also comprises an iterative step of checking whether the smoke detection alert is received from at least one edge detection device 200.

If the smoke detection alert is received, then the alert analysis module 304 analyses the received alert and based on said analysis it sends a control signal to the camera control module 303 in order to implement the first stage of the specific auto alarm verification algorithm. It also sends control signals to the notification module 308 to start the notification procedure, while based on feedback data from the user stations 500 it assigns appropriate labels to captured smoke images verified by the end user.

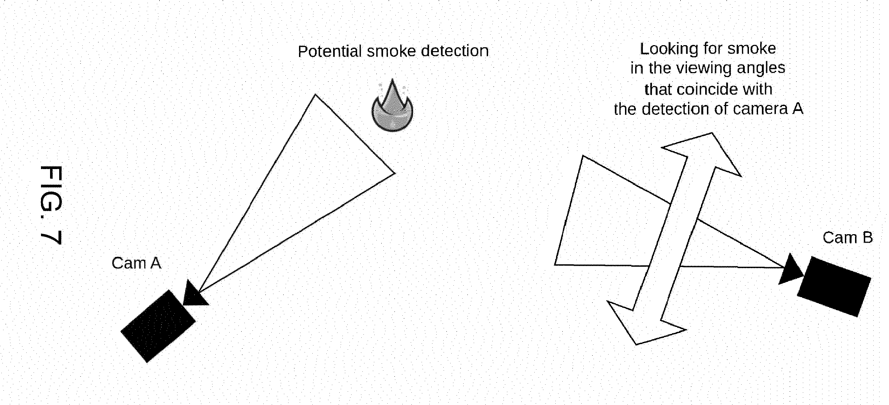

As it can be seen in Fig. 7, a special routine is provided for the plurality of detection devices 100 according to the invention. It is called AutoAlertConfirmation routine. Once the cloud-based control software embedded in the control unit 400 receives the information that the first edge device 200 of the plurality of detection devices 100 detected some anomalies in the environment parameter values over time allowing to determine that there was a fire, the camera control module 303 receives appropriate data to be forwarded to all edge devices 200 in order to modify parameters of all cameras so as to enforce them to search the smoke allegedly detected by the first camera 100.

In other words, if the fire is detected by one of the plurality of edge devices 200, all other edge devices 200 are remotely forced by the cloud based managing software 300 to control their complementary cameras 100 so as all cameras change their viewing angle in order to observe the same area synchronically with the first camera (see Fig.7 ). To summarise, when one of the cameras 100 registers smoke and it is detected by the AI edge module 2014, the other cameras 100 go into the detected smoke search mode by being forced to rotate in a proper direction. When they find it, they all face the identified smoke. The end user sees said step of the method according to the invention on the end user station 500 as a video stream from cameras 100 that do not scan the whole horizon any more but are focused on specific areas where the smoke was detected.

The above mentioned mechanism also performs the function of automatic exclusion of false positives. When camera A detects potential smoke, camera B tries to detect smoke in the area common to A and B. If it does not find any smoke, the probability of detecting actual smoke by A is reduced. If camera B finds smoke, the probability of detection is greatly increased.Then current parameters of all cameras are acquired by their complementary edge devices 200 and sent back to the camera control module 303 in the cloud-based control software 300.

Next, based on current parameters of all cameras acquired by their complementary edge devices 200 which are sent back to the camera control module 303 in the cloud-based control software 300, the fire location prediction module 306 calculates the intersection of their observation axes of all cameras 100 that detected the smoke and determines the location of the fire.

Even if the alert message is not yet confirmed, the method passes to the last step of sending notification. Said notifications are immediately sent by the cloud based software 300 from the control unit 400 to the relevant services via end user stations 500. Said alarm notification is sent to the observer (user of the system) via its user application 600 on its user station 500 with a request to verify or reject it. Such an alarm message consists of a video sequence with registered smoke and a text message asking for verification. Moreover, if the smoke detection alert is confirmed by at least a second camera 100 then the calculated fire localization is sent in the form of geographical coordinates which are further marked on the map on the end user station 500.

As mentioned above, the alarm can be in the form of an alarm on the web application or its mobile version. However the notification can be also an SMS alarm, alarm by automated telephone connection to the indicated list of numbers, alarm on the indicated list of e-mails, alarm on the indicated contact list using the indicated chat platform ( e.g. telegram, whatsapp, messenger, etc.), sending information to a device (for example dedicated device) located at the headquarters of the forest inspectorate, forest guard and/or fire brigade, which produces a sound signal after receiving the alarm signal. Notification solutions can be freely combined. As mentioned earlier, in the autonomous mode of the edge device 200, the notifications sent to the end user station 500 (e.g. to the mobile application of forest district employee) will differ in configuration, namely it will only contain a photo with potential smoke and location without continuous live streaming.

Regardless of the operating mode, in the additional substep of the step of confirming alert message, once the user receives an image with an alleged smoke via its application 600, the user is asked to confirm or deny the content of each received image with suspicion of fire. Thanks to the user acknowledging or dismissing the content received on the end user station 500, a new set of training data for the AI edge module is built for further local fine-tuning of the detection model. In other words, this information automatically extends the dataset and enables fine-tuning to local conditions and refinement of the machine learning-based detection model.

Other actions that can be taken by the end user via its application 600 are as follows:
- changing the zoom, and viewing angle of selected camera 100,
- selection of angles in which no detection is carried out,
- switching between manual and automatic sharpness setting,
- setting the minimum autofocus distance,
- controlling functions specific to the model of the camera used, e.g. anti-fog function, image enchantment,

Now, the method for training the AI edge module 204 will be described in reference to Fig. 9. The training data set is a set of uncompressed two frames sequences with positive or negative examples of the smoke. Each high-resolution frame within a pair of frames coming from one recording is cut into small fragments that are analysed by a neural network independently. In this way, when the AI model is trained a map of smoke detection probabilities for the entire image is received. For the training purposes more than 200 000 two frames video sequences were used.

In the approach according to the invention, the input of the algorithm is a sequence of image fragments from two adjacent frames in time with a resolution of approx. 200px X 200px each. For training purposes labels are assigned for each fragment of each training frame separately.

**As** it can be seen on Fig.9, in the first phase, the convolutional layers convert each input image fragment from a two frames sequence into a two separate feature vector, and then the feature vectors from all images in a sequence are jointly analysed by the deep layers.

The concept behind this approach stems from the fact that it is very difficult for a human observer to see the bottom on a single, still image frame. It is also easy to confuse it with fog or cloud. When the smoke is observed in the recording (a sequence of frames in time), modification of its shape over time is already extremely characteristic and easier to notice.

It works on a very similar principle in the case of the neural network used in the edge device 200 according to the invention, namely a set of frames, showing smoke at intervals of a few seconds, carries much richer information. The background research has shown that a two-frame analysis is sufficient to get the benefits of analysing the temporal evolution of smoke shape without compromising too much on the complexity and size of the machine learning model.

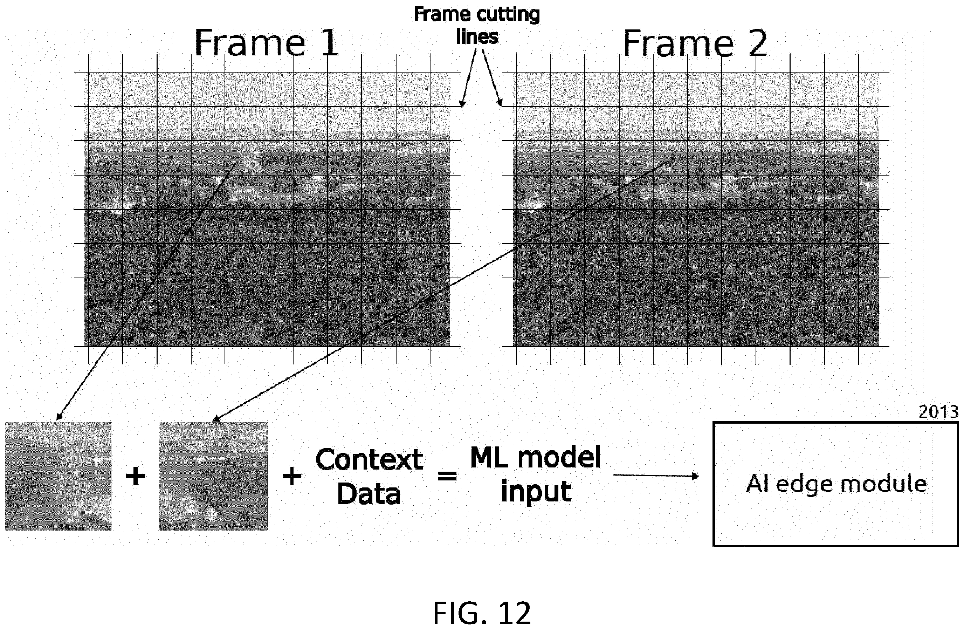

Since the data comes from a mobile camera 100, which most often constantly monitors the entire horizon, it is not trivial to download appropriate, overlapping fragments of the image for said two-frame analysis. As already mentioned, in order to find the right match, Optical Flow algorithms have been used that calculate the shift vector between the recording frames, thanks to which fragments from different areas of the recorded frame are cut, but presenting the same fragment of the observed terrain. Fig.12 depicts exemplary video sequence frames preprocessed according to the above mentioned scheme.

Fig. 9 presents a diagram of the neural network used in the AI edge module 204 of the edge device 200 according to the invention and input data sources and methods of their processing. There are two separate sets of convolutional layers, each taking as an input a labelled fragment from the one of a pair of frames adjacent in time. Then the output of the two sets of convolutional layers is concatenated and further processing is done by a set of deep convolutional layers.

Next the output of the set of deep layers is taken as an input to the last part of the neural network, namely to a set of at least one dense layer. As an input also contextual data are provided to said set of at least one dense layer. The output of the neural network is a set of of N probabilities for each N input pair of fragments of the input pair of frames (augmented by contextual data). The size of N depends on how small fragments the frame will be divided into, usually it is from 24 to 96, with the default value of 54. The larger N, the more accurate the image analysis, but also the longer the processing time of the full frame. Exemplary structure of the CNN used for said purpose can be EfficientNetV2S base model, 22M parameters, 8.8B FLOPS, 42 conv layers.

As it can be seen in Fig. 9, the input of the machine learning model, i.e the AI edge module, is further augmented with contextual data which fall into two categories. The first type of data is meteorological data, such as: temperature, humidity, insolation, atmospheric pressure, cloudiness, wind direction and speed. Data is sent to the edge model 204 being trained in the form of a time series with a time resolution of typically one hour.

The second type of data is data defining the location and spatial orientation of the camera. Background studies involved conversations with domain experts, people professionally involved in forest fire protection and preventive observation, what allowed to came to the conclusion that an additional very important vector of information, relating to the content of registered images, is data on the spatial location of the camera, the position of the sun and the relative position of the sun relative to the camera (to the horizontal line). This type of data is sent to the edge model 204 being trained in the form of appropriate polar coordinates with a time resolution of one frame.

In the AI edge module 204 of the edge device 200 according to the invention, the current position of the camera (the angle that is formed between the observation line and the north direction), the angle of inclination (the upward or downward angle that is formed between the observation line and the line crossing the horizon, this value being mainly close to zero, which is caused by observing mainly towards the horizon, so with an inclination close to zero) is used as input data. Supplementary input information is the current value of the optical zoom applied by the camera. In addition, for each geographical coordinate, for a given date and time, the angular apparent position of the sun in the sky can be calculated by implementing specially designed algorithms. With these two positions, it is also easy to calculate the relative position of the sun relative to the line of observation. The purpose of this approach is to allow the algorithms to distinguish what the position of the sun was for each frame. In other words, this way the algorithm will "know" whether the photo was taken against the sun or not. This fact significantly affects the appearance of the photo and the appearance of the recorded smoke. Moreover, the location data has been extended with geographic coordinates. Thanks to this, the trained model has information about the orientation of the sun relative to the recording and learns different visual representations of smoke, which differ significantly when the sun is behind the camera and when the camera is facing the sun.

In other words, the structure of the training set is as follows: the input of each example (X) is a set of the following data - a cut fragment of the first frame, a cut fragment of the second frame. Time difference between the two frames is from 0 to 15 seconds. If a shift occurred during the recording of these two frames, its value is calculated using optical flow algorithms so that these two fragments point to exactly the same place in space. In addition, the input is extended with context data representing meteorological conditions from the last 24 hours in the form of a time series with a resolution of 1 h and data on the orientation in the camera space, the apparent position of the sun in the sky and the relative orientation of the sun relative to the direction of camera observation. The ground truth (Y) data with which the model output is to be compared is the binary classification label specifying whether there is smoke (1) or no smoke (0) on a given fragment.

The training step comprises performing learning of said convolutional neural network utilising a transfer learning and fine tuning approach, wherein the classifier learns a classification task based on a loss function (L) that minimises a classifier loss function.Randomly initialized weights were used (as far as the convolutional part of the model is concerned), but pre-trained weights of a publicly available model e.g. EfficientNet trained on a large, public dataset, e.g. ImageNet were used, and then the training was repeated on a private dataset.

The training data sets were acquired as part of cooperation with the Polish Forestry Research Institute and with forest districts. Video recorders at selected emergency points were installed and the image that was sent from observation cameras was recorded. In this way, both a set of negative examples, representing a typical image recorded by cameras, as well as positive examples, when smoke caused by fires was recorded. To increase the number of the second class, smoke from controlled fires was recorded, for example, for maintenance purposes or creating firebreaks in vegetation.

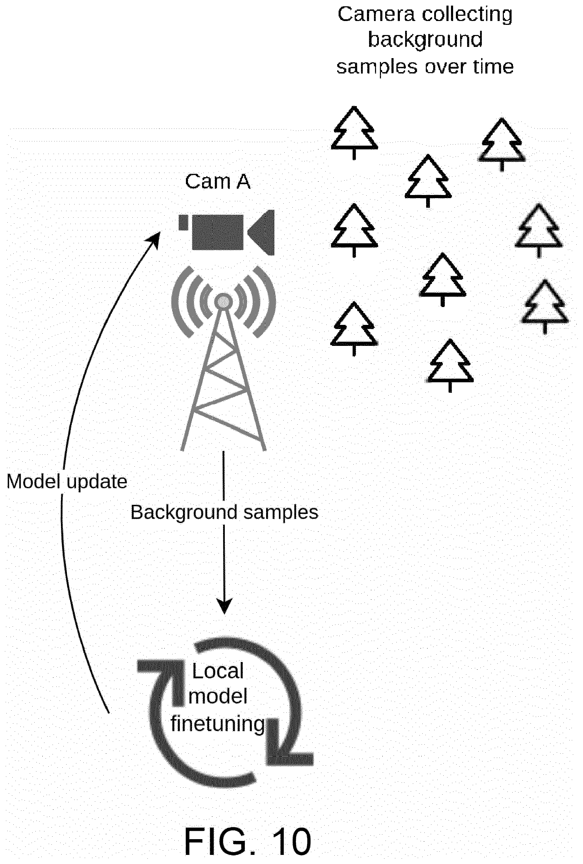

Now additional functionality of the system 2 according to the invention will be described. During the real-world tests, the parameters of the trained edge model 204 can be also tuned so that the prediction of the situation better reflects the situation in the real environment. Namely, as mentioned earlier, once the trained model is embedded into the edge device 200, it can be locally fine-tuned during its use. Regarding the first tuning mechanism depicted in Fig. 10, the camera 100 collects background data characteristic of its installation location. Then randomly selected frames from observations from a specific location are saved (every specified time (e.g. 1 h)) and extend the training set for the negative class "no smoke". From time to time, when the appropriate number of such negative examples is collected, the model training process is repeated. In order to reduce the consumption of computing power, the model is not trained from scratch, only the weights of the already trained model are used and with a low learning rate, the AI edge model 204 is trained on frames from a specific location of the edge device 200. Fig. 10 (LocalFinetuning) shows a diagram of updating the model based on local background data. This approach makes it possible to extend the data set with site-specific photos and reduces the number of false positives. Then, depending on the assigned label, the cage on which the smoke was detected extends the class "smoke" or "no smoke".

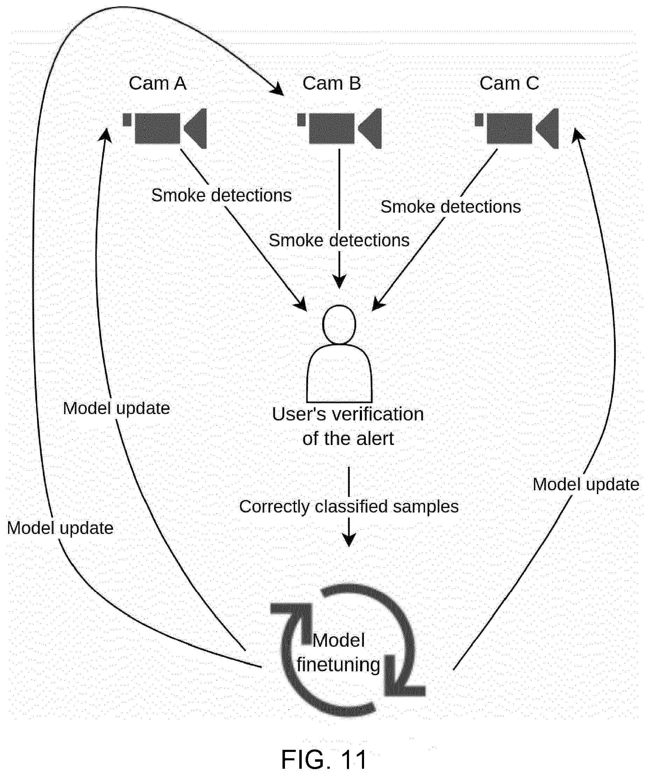

Another fine-tuning mechanism uses user feedback. Each time a smoke prediction is marked by the operator as an alarm confirmation or a false detection, this information is stored, automatically labeled with the appropriate class, and when the appropriate portion of examples is collected, the fine-tuning algorithm is started. However, unlike local fine tuning, in this case labeled detections from camera A also serve to improve the model operating in camera B. Fig. 11 (UserFeedbackFinetuning) shows a diagram of using user feedback to improve the machine learning model.

Provided herein is also a non-transitory computer readable medium comprising machine-executable code that, upon execution by one or more computer processors, implements a method for wildfire detecting run on the edge device 200 and/or on the cloud based software 300 embedded in the central unit 400 and a method for training the AI edge model according to the invention..

The code can be pre-compiled and configured for use with a machine having a processor adapted to execute the code, or it can be compiled during runtime. The code can be supplied in a programming language that can be selected to enable the code to execute in a pre-compiled or as-compiled fashion.

Hence, a machine readable medium, such as computer-executable code, may take many forms, including but not limited to, a tangible storage medium, a carrier wave medium or physical transmission medium. Non-volatile storage media include, for example, optical or magnetic disks, such as any of the storage devices in any computer(s) or the like, such as may be used to implement the databases, etc. shown in the drawings. Volatile storage media include dynamic memory, such as the main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

## Claims

1. A computer implemented method for training an AI edge model (2013) for smoke image analysis, **characterised in that** the method comprises
a) the step of providing on one or more hardware processors a convolutional neural network comprising
- two separate set of convolutional layers, each set of convolutional layers having an input for one of two correlated fragments, each fragment being a part of one frame from two frames video sequence
- one set of deep layers having as an input concatenated outputs of said two sets of convolutional layers
- a set of at least one dense layer having as an input data concatenated from an input for contextual data and an output of said set of deep layers
- an output from said set of at least one dense layer for outputting smoke detection probability for the two input fragments
b) the step of providing a training data set comprising:
- set of two frames video sequences, each frame being cut into fragments, each fragment of each training frame being labelled separately.
- set of contextual data for each frame, the contextual data being at least one among:
angle that is formed between the observation line of the camera and the north direction, angle of inclination that is formed between the observation line of the camera and the line crossing the horizon, value of the optical zoom applied by the camera, and for a given date and time, the apparent position of the sun in the sky and the relative orientation of the sun relative to the direction of camera observation, air temperature, humidity, insolation, atmospheric pressure, cloudiness, wind direction and speed;
c) the step of training said convolutional neural network via the one or more hardware processors with the use of said training data, to indicate presence of the smoke in the input two frames video sequence through a classifier output providing classification for each two correlated fragments into which the two frames of the video sequence was cut, and wherein the step of training comprises:
performing learning of said convolutional neural network utilising a transfer learning and fine tuning approach, wherein the classifier learns a classification task based on a loss function (L) that minimises a classifier loss function.

2. The method according to claim 1, wherein the two input fragments are correlated in space by the optical flow algorithm.

3. The method according to claim 1, wherein the meteorological data are provided as time series with a time resolution of one hour.

4. An edge device (200) for wildfire detection, comprising an edge processing unit (201), comprising a video capturing module (2011) **characterised in that** it further comprises an AI edge model (2013) for smoke image analysis, a video processing module (2012) configured to trim frames from video sequences into fragments and to correlate fragments between adjacent frames in video sequences, wherein said AI edge model (2013) for smoke image analysis is configured to output smoke detection probability based on said correlated fragments of two frame video sequence and contextual data and is trained by the method according to any of claims 1 to 3.

5. The edge device according to claim 4, wherein the edge processing unit (201) further comprises a device control module (2014) configured to decide based on the output of the AI edge model (2013) whether the smoke was detected on the input video sequence and to output a smoke detection alert.

6. The edge device according to claim 4 or 5, wherein it comprises an integrated camera (100).

7. A system (2) for wildfire detection comprising a cloud-based control software (300) and at least one edge device (200) according to any of claim 4 to 6.

8. The system according to claim 7, wherein the cloud based software (300) comprises a fire location prediction module (307) configured to predict the fire location based on the position and zoom parameters of at least two cameras (100) from which at least two edge devices (100) acquired video sequences on which the smoke was detected.

9. The system according to claim 7 or 8, wherein the cloud based software (300) comprises an AI edge models fine tuning module (303) configured to periodically train AI edge models (2013) based on training data gathered in the the cloud based software (300) during the work of the system (2).

10. The system according to claim 7 or 8 or 9, wherein the cloud-based control software (300) comprises a camera control module (302) configured to gather zoom and position parameters from cameras (100) and based on said data and the smoke detection alert from the frist edge device (200), to request change of their position and zoom parameters so as they face the smoke detected by the camera (100) connected to the first edge device (200) .

11. A method for wildfire detection comprising the following steps run on the edge device (200):
- video sequence capturing
- video sequence pre-processing
- machine learning inference by the AI model for smoke image analysis trained by the method according to any of claim 1-3
- checking if the smoke is detected based on the output of said AI model for smoke image analysis if the smoke is detected
- outputting smoke detection alert message

12. The method according to claim 11, wherein it further comprises steps run on the cloud based control software (300):
- acquiring compressed video stream
- checking for the smoke detection alert message
if the smoke detection alert message is received from the first edge device (200) then
- sending notification
- confirming alert message
if the smoke detection alert is confirmed
- predicting fire localizacion

13. The method according to claim 11, wherein checking if the smoke is detected comprises comparing smoke detection probabilities relating to fragments of the two frames within which the smoke was detected with a threshold value.

14. The method according to claim 12, wherein confirming alert message comprises sending control signals to all cameras (100) to change their position and zoom parameters so as they face the smoke detected by a camera (100) connected to the first edge device (200) .

15. A computer-readable storage medium having instructions encoded thereon which when executed by a processor, cause the processor to perform the method according to claim 1 to 3.
